# EUROPEAN PATENT SPECIFICATION

(11) **EP 1 298 984 B1**
(45) Date of publication and mention of the grant of the patent: **18.08.2004**
(21) Application number: 00970421.4
(22) Date of filing: 01.09.2000
(51) Int. Cl.: A01K 15/02

(54) **AUTOMATIC HORSE TRAINING SYSTEM**
AUTOMATISCHE ANLAGE ZUM TRAINIEREN VON PFERDEN
SYSTEME D'ENTRAINEMENT DE CHEVAUX AUTOMATIQUE

(30) Priority: 22.06.2000 TR 200001863; 02.08.2000 TR 200002265
(43) Date of publication of application: 09.04.2003
(73) Proprietor: Kurt, Mehmet, Ceyhan, 01960 Adana (TR)
(72) Inventor: Kurt, Mehmet, Ceyhan, 01960 Adana (TR)
(74) Representative: Gürsoy, Mehmet Bahadir
(86) International application number: PCT/TR2000/000048
(87) International publication number: WO 2001/097606

(56) References cited:
- DE-A- 19 834 257
- US-A- 4 266 508
- US-A- 4 619 222

## Description

### TECHNICAL FIELD

This invention relates to an automatic horse training system providing training of horses for races without human intervention. More particularly the invention relates to components embodying the system such as stables, horse training devices, actuating means etc, and the working sequence thereof i.e. process of the system components. Document US-A-4 266 508 discloses a horse training device comprising a tractor pulled carriage for confining a horse while training or exercising.

### BACKGROUND OF THE INVENTION

Applications comprising horse training systems of state of the art are highly dependent upon labor of human being. Horse training program is carried out by horse trainers applying a formerly determined training practice.

Since horses are very sensitive creatures in terms of their psychological sense, and the horse training patterns are dependent upon human being, the efficiency of such training models becomes inevitably dependent on the pedagogical formation of the horse trainers. However, experiences have dramatically shown that lacking of such trainers not having pedagogical formation and so the difficulties for acknowledging psychologies of horses result violence of the trainers against horses being trained. This is the main mistake causing the racehorses away from the racecourses or even worse causing the horses death.

Despite horses are very sensitive in terms of psychological sense, they however can be trained conditionally. In the light of this concept, horses are begun trained in the early years of their ages i.e. in the period of colt. Consequently, showing great performances of racehorses are not only dependent on their origins but also dependent on the features gained later than birth.

In order to provide the racehorses run the particular distances in a fastest way, training program, given thereof, should be started by the colt period of the horses.

However the main subject determining a horse to start the said training program is the physical improvement of the horse for carrying the rider for the training. Due to this obstacle, the common practice is simply to wait the colt to improve physically for training purpose according to present approach. Consequently, this particular period of time is idle in terms of valuable training time and in addition to that potential racehorses start their race orientation late, accompanying with losing their potential efficiency.

When considered the number of horses being trained throughout the world, the training pattern dependent on human intervention may possibly hamper the training program scheduled earlier, so resulting a decrease of racehorse potentials.

On the other hand, physical factors of horses are of crucial importance in terms of performances thereof during a race. Said physical factors basically include heart and lung functions and muscles. Determination of physical capabilities of racehorses is normally carried out after the race run i.e. when the horse is not its top performance. Naturally, such kind of physical activity determination do not reflect the actual values that are important for a racehorse performance.

### DESCRIPTION OF THE INVENTION

Object of the present invention is to provide a complete automation in the process of horse training course.

Another object of the present invention is to eliminate the trainers lacking pedagogical formation and human intervention for horse training so that psychological stabilization of horses can be achieved.

Another object of the present invention is to preclude disabling and so being away from racecourses of the racehorses.

Another object of the present invention is to monitor and evaluate the performances of the racehorses during the training by locating electrodes and veterinarian means to different regions of the bodies of horses.

The invention as claimed in independent claims 1 and 16 is intended to achieve these objects. Preferred features of the invention are set out in the dependent claims.

Automatic horse training system embodied in the scope of the present invention comprises four main components. Stables, being one of the components, are arranged next to each other and occupy space that only one horse can exist therein. The second main component is horse training device rear and lateral sides covered by a flexible material thereof. The third main component is an electronic signal supplier for controlling the other system components such as horse training device stable doors etc. The fourth main component is a reflector unit for reflecting signals supplied by the electronic supplier unit.

In addition to the said main components, there are also monitoring means placed out of the racecourse for monitoring physical performances of the racehorses by electrodes and veterinarian means located different regions of the bodies of horses.

In the stables occupying only one horse there are guiding means, for example pistons, actuated by control unit and moving through the width of the stable. In order to introduce the horses in the horse training device, there is corridor existing between the stable and the horse training device. Another guiding means leading from inside the guiding means, moving through the width of the stable, forces the horse to introduce into the horse training device through the corridor.

Before starting the training program, rear doors of the horse training devices are aligned with the corridor door that the horse leaving therethrough. Therefore the racehorse is introduced into the horse training device the rear and lateral sides are covered by a flexible material thereof. Similarly, the front side of the horse training device is kept close by an embodied locking means thereof. This locking means functions to maintain the horse in the horse training device and during the training program, but has a feature in that it can be unlocked when the horse starts sprinting.

When the training program is completed, front doors of the horse training devices are aligned with the corridor door so that the horse can introduce into the corridor and to the stable finally. At this stage, the horse is forced to front door of the horse training device by a pushing means located rear side of the horse training device so that the horse can leave the device and enter to the corridor first and then the stable.

One of the crucial feature of the present invention is to provide a multiple automatic components that enable the training of several horses simultaneously .

### BRIEF DESCRIPTION OF THE DRAWINGS

Further objects and advantages of the present invention will become apparent upon reading the following description taken in conjunction with the appended drawings wherein:
Figure 1 illustrates the top view of the automatic horse training course with the accompanied training means.
Figure 2 illustrates the horse training device with the accompanied components such as stable, corridor and guiding elements.
Figure 3 illustrates the introduction way of horses into the stables.
Figure 4 illustrates the locking means in detail.
Figure 5 illustrates an alternative control means being an electronic signal supplier and a reflector for the control of automatic components.
Figure 6 illustrates an alternative line embodiment for the horse training devices.
Figure 7 illustrates the racecourses one within the other.

### REFERENCE NUMBERS

| | | | |
|---|---|---|---|
| 1. | Horse training device | 5. | First horse guiding means |
| 2. | Corridor | 6. | Cylinder |
| 3. | Stable | 7. | Pump |
| 4. | Racecourse | 8. | Cylinder pipes |
| 9. | Second horse guiding means | 24. | Flexible arms |
| 10. | Corridor door | 25. | Female part |
| 11. | Device rear door | 26. | Male part |
| 12. | Device front door | 27. | Signal supplier |
| 13. | Wheel | 28. | Reflector |
| 14. | Shaft | 29. | Grid |
| 15. | Locking means | 30. | Brushes |
| 16. | Rail | 31. | Line |
| 17. | Stable door | 32. | Line connection point |
| 18. | Stable sensor | 33. | Motor |
| 19. | Cylinder sensor | 34. | Device column |
| 20. | Hinge | 35. | Cords |
| 21. | Interface surface | 36. | Bridle |
| 22. | Horse pushing means | | |
| 23. | Springs | | |

### DETAILED DESCRIPTION OF THE INVENTION

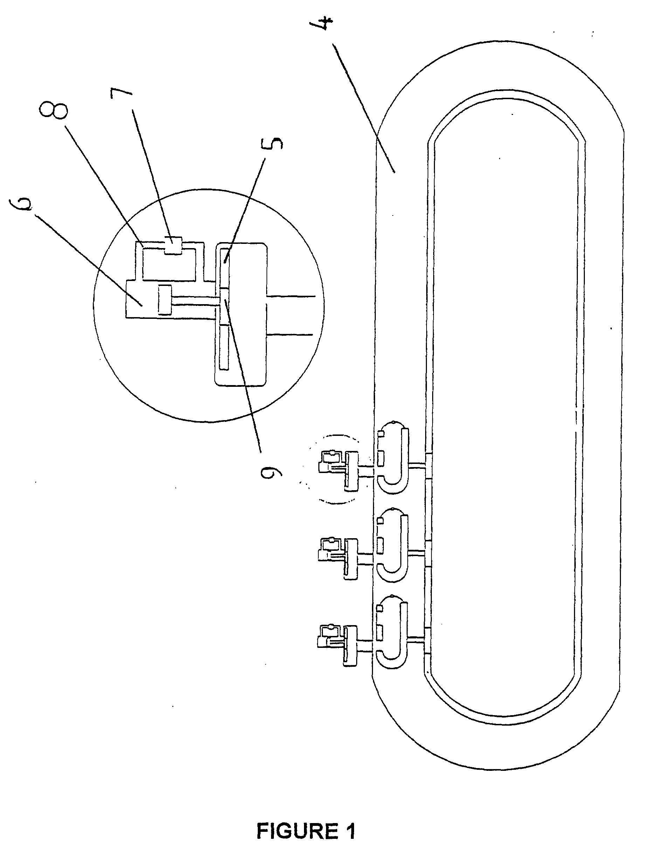

Figure 1 illustrates the main components of the multiple horse training racecourse (4). Before starting training, stable door (17) is closed and displacements of horse guiding means (5,9) which are one within the other are zero.

Control of the mechanical components comprised in the racecourse (4) is achieved by automatically controlled equipment i.e. by microprocessors. In this particular example the distance between the horse training devices (1) is constant.

In order to start the training program, rear doors (11) of the horse training devices (1) are aligned with the corridor doors (10). Distance between the corridor door (10) and rear door (11) is sufficiency short so that the horse will be trained cannot escape anywhere but introduce into the horse training device (1). At this stage stable door (17) and the corridor door (10) are automatically opened and by actuating a pump (7), lubrication is passed through the cylinder pipes (8) so the first and the second horse guiding means (5,9) are moved at the same time. Since the first guiding means (5) are embodied by the same size with the stable (3) width, when actuated the horse being inside the stable (3) is directed towards the corridor (2). Once the first horse guiding means (5) reaches the level of stable door (17) its movement is terminated by a cylinder sensor (19) located in the stable (3). In this case the second guiding means (9) is moved through the corridor (2) so as to direct the horse towards the corridor door (10). Afterwards, the horse goes through the corridor door (10) first, and then the rear door (11) , which are both automatically opened, of the horse training device (1). After that the horse is introduced into the horse training device (1) and the rear door (11) is closed. Once the horse leaves the corridor (2), the horse guiding means (5,9) are returned back their initial positions.

On the condition that a horse not able to leave the stable, running of the pump is terminated by means of stable sensors (18) located inside the stable (3).

Lateral and rear sides of the horse training devices (1) are covered by a flexible material in order to prevent the horse to hurt himself while the training program. The front side not covered by the said flexible material, is closed by a locking means, however the locking means is also embodied by flexible material.

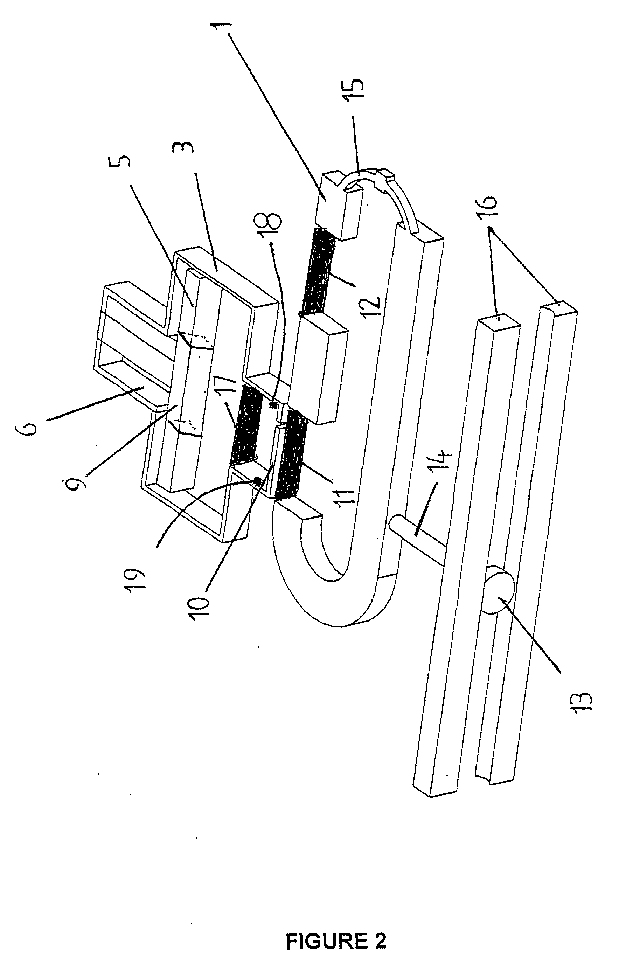

Considering the embodiment according to figure 2, the horse training devices (1) are characterized by a shaft (14) placed the lateral sides thereof, and a wheel (13) disposed one end of the said shaft (14), furthermore the rails (16) that the wheel (13) placed therein. Once the horse training device (1) is actuated, the wheels (13) inside the rails (14) rotate and the training program of the horses in the training device (1) the speeds of which can be maintained at a desired level starts.

Actuation mechanisms of the horse training devices (1) can be achieved several means: According to one preferred embodiment, tractor means located rear or front sides of the training devices (1) are used to move thereof.

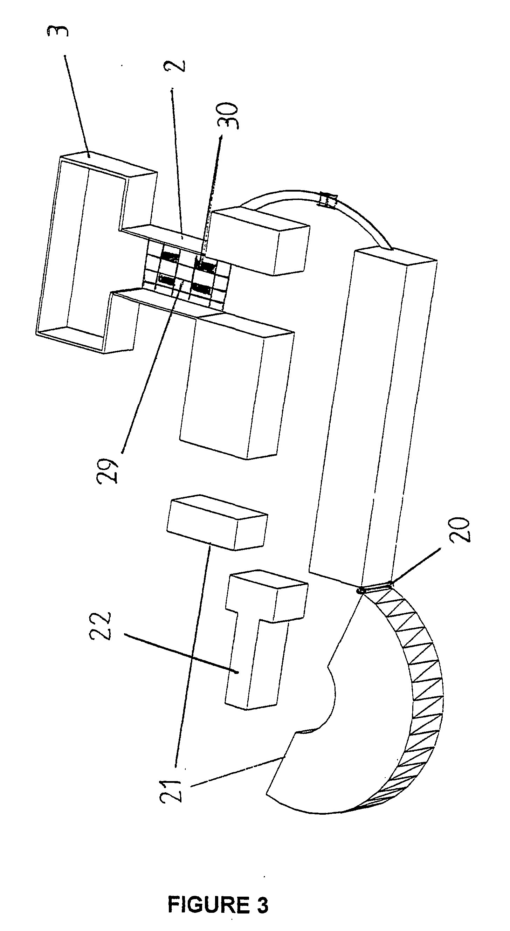

After the training program is completed, as similar to the starting of the program, front doors (12) of the training devices are aligned with the corridor doors (10) in order to direct the horse towards the stable (3). At this stage front door (12) of the training device (1) is opened first and then the rear side having a semi-circular shape is opened from its hinge (20) by separating the rear side contacted with interface surface (21) from the lateral sides of the device (1). Afterwards pushing means (22) introducing to the training device (1) through the opened rear side, forces the horse to leave the training device (1) from the front door (12). Once the horse leaves the device (1), it goes through the corridor (2) and enter to the stable (3) as seen in figure 3. Since the racing shoes get dirty during the training program, the legs and the racing shoes of the horses are cleaned by brushes (30) located under a grid (29) while they go through the corridor (2).

Alternatively the pushing means (22) providing guidance of the horses to the corridor (2) can be embodied behind the training device (1).

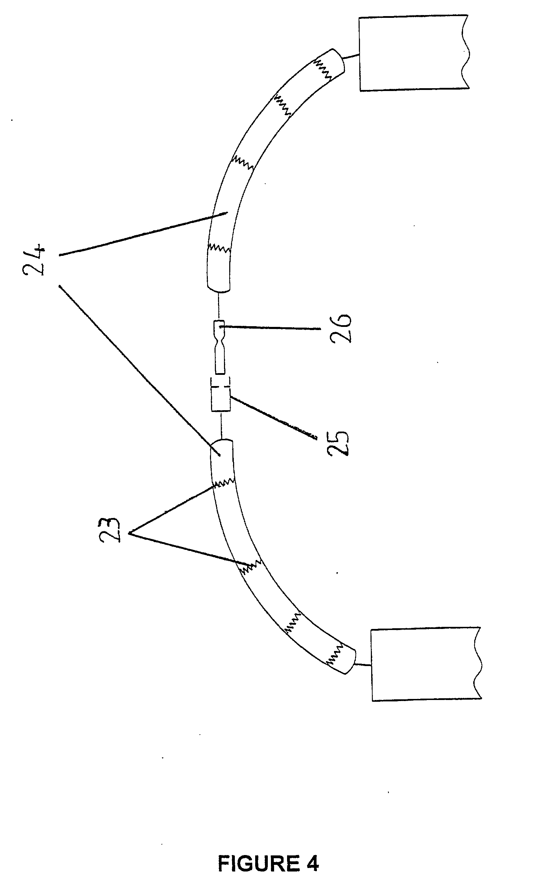

In figure 4, detailed view of the locking means (15) is provided. According to the figure, locking means consists of flexible arms (24) connected by its ends to the training device (1) and a female part (24) and male part (26) that link the said flexible arms (24). There exists springs (23) so as to decrease the stiffness of the flexible arms. Since the speed of the training devices (1) are maintained constant at predetermined level, when a horse starts sprinting the locking means (15) can unlock itself so that the horse can leave the training device (1) without an obstacle.

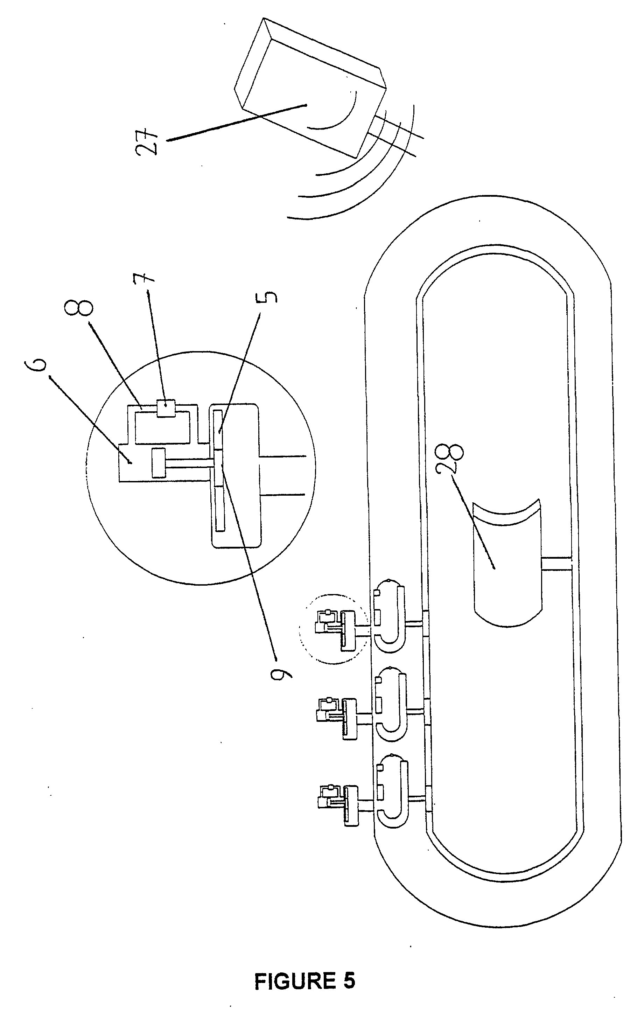

Mechanical components in the scope of the present invention can be controlled alternatively by an electronic signal supplier (27) and a reflector (28) unit that receives such electronic signals and reflects thereof to the mechanical components. Said alternative embodiment is illustrated in figure 5.

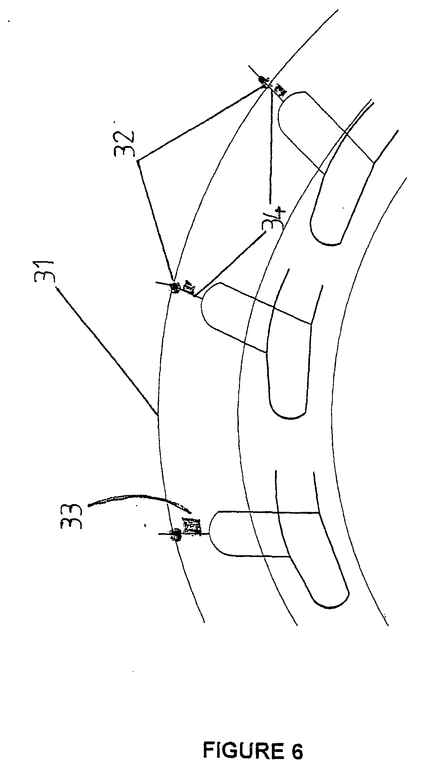

Similarly another alternative embodiment can be suggested for the rail structure that provides the training devices (1) aligned and guided around the racecourse. In this alternative embodiment, training devices (1) are guided by means of a line (31) constructed above the devices (1) that are connected thereof. This kind of alternative embodiment is shown in figure 6. According to the figure, the training devices (1) are displaced vertically through the device columns (34) i.e. upwards and downwards directions by means of motors (33) located at the line connection points (32). In this structure there is no rear and front doors of the training devices (1) the movement of which take place in vertical direction. Similarly in this alternative training device, there is a locking means (15) located rear side of the device (1) for closing thereof.

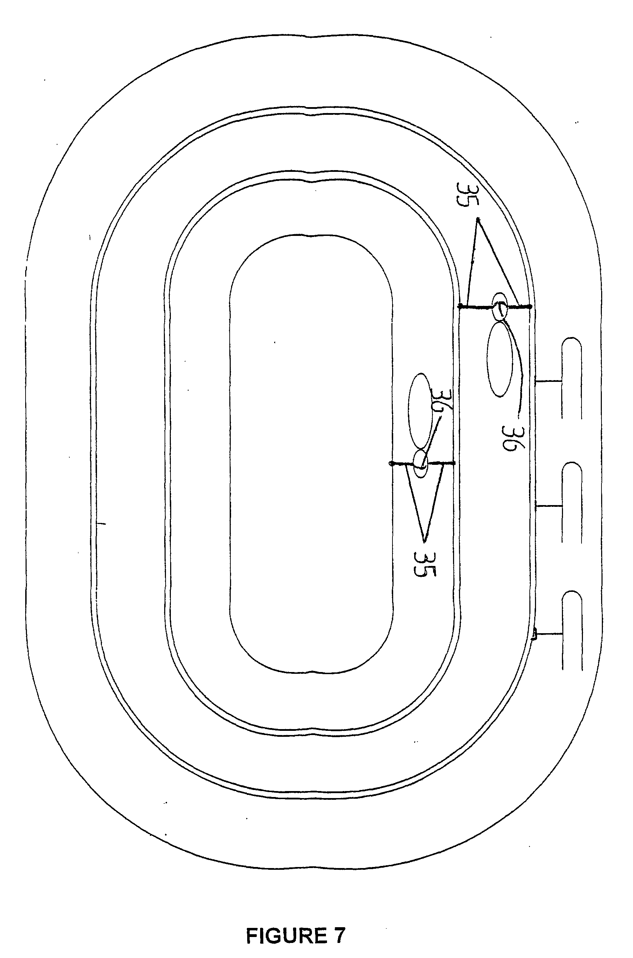

Above-mentioned racecourse (4) having training devices (1), stables (3) etc. that can be as single or multiple components may be embodied several racecourses that one within the other. Such embodiment is illustrated in figure 7.

One of the multiply embodied racecourses is provided for training program that serves a constant speed for the horses and the other one is for sprinting of the horses and the third one is just for walking of horses.

Said multiple racecourse, particularly the parts for sprinting and walking of the horses are embodied with some differences with respect to the constant speed embodiment in that the horse sprinting or walking is put on a bridle (36) and said bridle is connected to rails (16) as seen in figure 7 by means of cords (35) the ends of which are disposed into the rails (16) via wheels (13).

On the other hand, in order to determine the physical performances during the training program, several electrodes and veterinarian means that can be controlled remotely by electronic signal transmission or alternatively by remote sensing are placed to different regions of the body of the horses. Therefore monitoring of the heart, lung and muscles during the training program is achieved. In addition to that instantaneous performance determining methods, it is possible to evaluate physical performances of the horses by samples taken from the spittle and blood of the horses.

## Claims

1. An automatic horse training system comprising at least one horse training device (1), lateral and rear sides of which are covered by a flexible material and front side of which is closed by a locking means (15) thereof, and said horse training device (1) being actuated by a tractor placed front or rear part thereof, and guided by rails (16) or a line (31) located upper side of the said device (1), and electrodes or veterinarian measurement means being placed to different regions of bodies of horses for monitoring physical performances thereof by remote electronic signal transmission or alternatively by remote sensing, and movement of the whole mechanical components including stables (3) and corridors (2) in the training system being achieved automatically.

2. An automatic horse training system according to claim 1, **characterized in that** there is provided a stable (3) in which a first horse guiding means (5), preferably a piston, being able to move therein and there is provided a corridor (2) in which a second horse guiding means (9), preferably a piston, being able to move therein and multiple horse training devices (1) preferably arranged successively.

3. An automatic horse training system according to claim 1 and 2, **characterized in that** there is provided a pump (7) actuating the first and the second horse guiding means (5,9) and a cylinder (6) allowing the movement of said guiding means (5,9) therein.

4. An automatic horse training system according to any one of the previous claims, **characterized in that** there are provided at least one stable door (17), at least one corridor door (10), at least one device front door (12) and at least one device rear door (11).

5. An automatic horse training system according to any one of the previous claims, **characterized in that** there are stable sensors (18) located in the stable (3), and cylinder sensors (19) for terminating the motion of the first horse guiding means (5) at the level of stable door (17).

6. An automatic horse training system according to any one of the previous claims, **characterized in that** said horse training device (1) is provided with a shaft (14), a wheel (13) located an end of the shaft (14), and rails (16) that the wheels (13) disposed therein.

7. An automatic horse training system according to any one of the previous claims, **characterized in that** a locking means (15) is embodied at the front part of the said training device (1).

8. An automatic horse training system according to claim 7, **characterized in that** said locking means (15) is provided with flexible arms (24), a female part (25) and a male part (26) connecting the flexible arms (24) to each other and springs (23) disposed in said flexible arms (24).

9. An automatic horse training system according to any one of the previous claims, **characterized in that** a hinge (20) is provided for opening the rear side of said horse training device (1).

10. An automatic horse training system according to any one of the previous claims, **characterized in that** all mechanical components in the scope of the horse training system are actuated by an automatically controlled equipment.

11. An automatic horse training system according to claim 10, **characterized in that** mechanical components are actuated by an electronic signal supplier (27) and a reflector (28) unit receiving said electronic signals to control the components.

12. An automatic horse training system according to any one of the previous claims, **characterized in that** brushes (30) are provided under a grid (29) for cleaning race shoes and legs of horses after completion the training program.

13. An automatic horse training system according to any one of the previous claims, **characterized in that** a line (31) is placed around a racecourse (4) and line connection points (32) for moving the training devices (1) in vertical direction are provided.

14. An automatic horse training system according to claim 13, **characterized in that** said racecourse (4) comprises at least one sprinting racecourse, at least one walking racecourse for horses, and at least one racecourse for constant speed training of horses.

15. An automatic horse training system according to claim 14, **characterized in that** there is provided cords (35) for connecting the bridles (36) of horses to the rails (16), and wheels (13) are provided at the ends of said cords (35) in said sprinting and walking racecourse.

16. A method for automatically training horses with an automatic horse training system according to any one of claims 1 to 15 comprises the following steps;
- providing the horse training devices (1),
- directing the horses into the horse training devices (1) by horse guiding means,
- moving the horse training devices (1) around the racecourse (4).
- using electrodes and veterinarian means for monitoring the physical performances of horses and evaluating the results during the training program,
- completing the movement of the horse training devices (1) and finishing the training program of horses,
- removing the horses from the training devices (1) by pushing means (22).

17. A method for automatic horse training according to claim 16 **characterized in that**, rear doors (11) of training devices (1) are aligned with a corridor door (10) before the training program.

18. A method for automatic horse training according to claim 17 **characterized in that**, after aligning the rear door (11) of the training devices (1) with the corridor door (10), stable door (17) is opened first and then the corridor door (11) is opened.

19. A method for automatic horse training according to any one of the previous claims 17 and 18 **characterized in that**, after opening the corridor door (11), the first guiding means (5) in the stable (3) is displaced and once it reaches the level of stable door (17) said first guiding means (5) is returned to its initial position.

20. A method for automatic horse training according to any one of the previous claims 16 to 19 **characterized in that**, after reaching the stable door (17) level of first guiding means (5), second guided means (9) is moved through a corridor and at the same time rear door (11) of the training device (1) is opened.

21. A method for automatic horse training according to claim 20 **characterized in that**, after opening the rear door (11), the horse is introduced into the training device (1) and the rear door (11) is closed.

22. A method for automatic horse training according to claim 21 **characterized in that**, after closing the rear doors (11), said training devices (1) are moved and once the training program is completed, front doors (12) of the training devices (1) are aligned with the corridor doors (17) and front doors (12) are opened.

23. A method for automatic horse training according to any one of the previous claims 16 to 22 **characterized in that**, after opening front doors (12) the rear part of the training device is opened and horse pushing means (22) is displaced to force the horses to leave the training device.

24. A method for automatic horse training according to claim 23 **characterized in that**, after leaving the training device (1) of horses, race shoes and legs are cleaned thereof.

25. A method for automatic horse training according to any one of the previous claims 23 and 24 **characterized in that**, after going through the corridor (2), the horse introduces into a stable (3) and the stable door (17) is closed.

## Patentansprüche

1. Automatisches Pferdetrainingssystem, umfassend zumindest eine Pferdetrainingsvorrichtung (1), deren seitlich gelegene Seiten und deren Hinterseite mit einem biegsamen Material bedeckt sind, und deren Vorderseite durch ein Sperrmittel (15) verschlossen ist, wobei die Pferdetrainingsvorrichtung (1) durch eine davor oder dahinter angeordnete Zugmaschine betätigt wird und durch Schienen (16) oder ein Kabel (31), das sich an der Oberseite der Vorrichtung (1) befindet, geführt wird, und wobei Elektroden oder tierärztliche Meßmittel an verschiedene Bereiche der Körper von Pferden angelegt sind, um durch elektronische Fernsignalübertragung oder alternativ durch Fernfeststellung die physische Leistung der Pferde zu überwachen, und wobei die Bewegung der gesamten mechanischen Bestandteile einschließlich von Ställen (3) und Gängen (2) im Trainingssystem automatisch erreicht wird.

2. Automatisches Pferdetrainingssystem nach Anspruch 1, **dadurch gekennzeichnet, daß** ein Stall (3) bereitgestellt ist, worin sich ein erstes Pferdeführungsmittel (5), vorzugsweise ein Kolben, bewegen kann, und ein Gang (2) bereitgestellt ist, worin sich ein zweites Pferdeführungsmittel (9), vorzugsweise ein Kolben, bewegen kann, und wobei mehrere Pferdetrainingsvorrichtungen (1) vorzugsweise aufeinanderfolgend angeordnet sind.

3. Automatisches Pferdetrainingssystem nach Anspruch 1 oder 2, **dadurch gekennzeichnet, daß** Folgendes bereitgestellt ist: eine Pumpe (7), die das erste und das zweite Pferdeführungsmittel (5, 9) betätigt, und ein Zylinder (6), der die Bewegung der Führungsmittel (5, 9) darin gestattet.

4. Automatisches Pferdetrainingssystem nach einem der vorhergehenden Ansprüche, **dadurch gekennzeichnet, daß** zumindest eine Stalltür (17), zumindest eine Gangtür (10), zumindest eine Vorrichtungsvordertür (12) und zumindest eine Vorrichtungshintertür (11) bereitgestellt sind.

5. Automatisches Pferdetrainingssystem nach einem der vorhergehenden Ansprüche, **dadurch gekennzeichnet, daß** sich im Stall (3) Stallsensoren (18) befinden und Zylindersensoren (19) vorhanden sind, um die Bewegung des ersten Pferdeführungsmittels (5) an der Ebene der Stalltür (17) zu beenden.

6. Automatisches Pferdetrainingssystem nach einem der vorhergehenden Ansprüche, **dadurch gekennzeichnet, daß** die Pferdetrainingsvorrichtung (1) mit Folgendem versehen ist: einer Welle (14), einem an einem Ende der Welle (14) gelegenen Rad (13), und Schienen (16), in denen das Rad (13) angeordnet ist.

7. Automatisches Pferdetrainingssystem nach einem der vorhergehenden Ansprüche, **dadurch gekennzeichnet, daß** am Vorderteil der Trainingsvorrichtung (1) ein Sperrmittel (15) aufgenommen ist.

8. Automatisches Pferdetrainingssystem nach Anspruch 7, **dadurch gekennzeichnet, daß** das Sperrmittel (15) mit Folgendem versehen ist: biegsamen Armen (24), einem Buchsenteil (25) und einem Steckerteil (26), die die biegsamen Arme (24) miteinander verbinden, und Federn (23), die in den biegsamen Armen (24) angeordnet sind.

9. Automatisches Pferdetrainingssystem nach einem der vorhergehenden Ansprüche, **dadurch gekennzeichnet, daß** ein Scharnier (20) bereitgestellt ist, um die Hinterseite der Pferdetrainingsvorrichtung (1) zu öffnen.

10. Automatisches Pferdetrainingssystem nach einem- der vorhergehenden Ansprüche, **dadurch gekennzeichnet, daß** alle mechanischen Bestandteile im Umfang des Pferdetrainingssystems durch eine automatisch gesteuerte Einrichtung betätigt werden.

11. Automatisches Pferdetrainingssystem nach Anspruch 10, **dadurch gekennzeichnet, daß** die mechanischen Bestandteile durch Folgendes betätigt werden: einen elektronischen Signalgeber (27) und eine Reflektoreinheit (28), die die elektronischen Signale empfängt, um die Bestandteile zu steuern.

12. Automatisches Pferdetrainingssystem nach einem der vorhergehenden Ansprüche, **dadurch gekennzeichnet, daß** unter einem Gitter (29) Bürsten (30) bereitgestellt sind, um nach dem Abschluß des Trainingsprogramms die Rennhufeisen und die Beine der Pferde zu reinigen.

13. Automatisches Pferdetrainingssystem nach einem der vorhergehenden Ansprüche, **dadurch gekennzeichnet, daß** ein Kabel (31) um eine Rennbahn (4) herum angeordnet ist und Kabelanschlußpunkte (32) zum Bewegen der Trainingsvorrichtungen (1) in der senkrechten Richtung bereitgestellt sind.

14. Automatisches Pferdetrainingssystem nach Anspruch 13, **dadurch gekennzeichnet, daß** die Rennbahn (4) zumindest eine Sprintrennbahn, zumindest eine Gehrennbahn für Pferde und zumindest eine Rennbahn für ein Training von Pferden mit konstanter Geschwindigkeit umfaßt.

15. Automatisches Pferdetrainingssystem nach Anspruch 14, **dadurch gekennzeichnet, daß** in der Sprintrennbahn und in der Gehrennbahn Stricke (35) bereitgestellt sind, um die Zügel (36) der Pferde mit den Schienen (16) zu verbinden, und an den Enden der Stricke (35) Räder (13) bereitgestellt sind.

16. Verfahren zum automatischen Trainieren von Pferden mit einem automatischen Pferdetrainingssystem nach einem der Ansprüche 1 bis 15, wobei das Verfahren folgende Schritte umfaßt:
- Bereitstellen der Pferdetrainingsvorrichtungen (1),
- Lenken der Pferde durch Pferdeführungsmittel in die Pferdetrainingsvorrichtungen (1),
- Bewegen der Pferdetrainingsvorrichtungen (1) um die Rennbahn (4),
- Verwenden von Elektroden und tierärztlichen Mitteln, um während des Trainings die physischen Leistungen der Pferde zu überwachen und die Ergebnisse zu bewerten,
- Abschließen der Bewegung der Pferdetrainingsvorrichtungen (1) und Beenden des Trainingsprogramms der Pferde,
- Entfernen der Pferde durch Schiebemittel (22) aus den Trainingsvorrichtungen (1).

17. Verfahren zum automatischen Trainieren von Pferden nach Anspruch 16, **dadurch gekennzeichnet, daß** die Hintertüren (11) der Trainingsvorrichtungen (1) vor dem Trainingsprogramm mit einer Gangtür (10) ausgerichtet werden.

18. Verfahren zum automatischen Trainieren von Pferden nach Anspruch 17, **dadurch gekennzeichnet, daß** nach dem Ausrichten der Hintertür (11) der Trainingsvorrichtungen (1) mit der Gangtür (10) zuerst die Stalltür (17) und dann die Gangtür (10) geöffnet wird.

19. Verfahren zum automatischen Trainieren von Pferden nach einem der vorhergehenden Ansprüche 17 und 18, **dadurch gekennzeichnet, daß** nach dem Öffnen der Gangtür (10) das erste Führungsmittel (5) im Stall (3) verschoben wird, und das erste Führungsmittel (5) in seine ursprüngliche Stellung zurückgeführt wird, sobald es die Ebene der Stalltür (17) erreicht.

20. Verfahren zum automatischen Trainieren von Pferden nach einem der vorhergehenden Ansprüche 16 bis 19, **dadurch gekennzeichnet, daß** das zweite Führungsmittel (9) nach dem Erreichen der Ebene der Stalltür (17) durch das erste Führungsmittel (5) durch einen Gang geführt wird und gleichzeitig die Hintertür (11) der Trainingsvorrichtung (1) geöffnet wird.

21. Verfahren zum automatischen Trainieren von Pferden nach Anspruch 20, **dadurch gekennzeichnet, daß** das Pferd nach dem Öffnen der Hintertür (11) in die Trainingsvorrichtung (1) eingebracht wird und die Hintertür (11) geschlossen wird.

22. Verfahren zum automatischen Trainieren von Pferden nach Anspruch 21, **dadurch gekennzeichnet, daß** die Trainingsvorrichtungen (1) nach dem Schließen der Hintertüren (11) bewegt werden, und die Vordertüren (12) der Trainingsvorrichtungen (1) nach dem Abschluß des Trainingsprogramms mit den Gangtüren (17) ausgerichtet werden und die Vordertüren (12) geöffnet werden.

23. Verfahren zum automatischen Trainieren von Pferden nach einem der vorhergehenden Ansprüche 16 bis 22, **dadurch gekennzeichnet, daß** nach dem Öffnen der Vordertüren (12) der hintere Teil der Trainingsvorrichtung geöffnet wird und das Pferdeschiebemittel (22) verschoben wird, um die Pferde zum Verlassen der Trainingsvorrichtung zu zwingen.

24. Verfahren zum automatischen Trainieren von Pferden nach Anspruch 23, **dadurch gekennzeichnet, daß** nach dem Verlassen der Trainingsvorrichtung (1) durch die Pferde deren Rennhufeisen und Beine gereinigt werden.

25. Verfahren zum automatischen Trainieren von Pferden nach einem der vorhergehenden Ansprüche 23 und 24, **dadurch gekennzeichnet, daß** das Pferd nach dem Hindurchgehen durch den Gang (2) in einen Stall (3) eingebracht wird und die Stalltür (17) geschlossen wird.

## Revendications

1. Système d'entraînement de chevaux automatique comprenant au moins un dispositif d'entraînement de chevaux (1), les faces latérales et arrière duquel sont couvertes par un matériau souple et la face avant duquel est fermée par un moyen de verrouillage (15) de celui-ci, et ledit dispositif d'entraînement de chevaux (1) étant actionné par un tracteur placé au niveau de la partie avant ou arrière de celui-ci, et guidé par des rails (16) ou une ligne (31) situés sur la face supérieure dudit dispositif (1), et des électrodes ou des moyens de mesure vétérinaires étant placés sur différentes régions des corps des chevaux en vue de surveiller les performances physiques de ceux-ci par transmission de signaux électroniques à distance ou en variante par détection à distance, et le mouvement de l'ensemble des composants mécaniques y compris les écuries (3) et les couloirs (2) dans le système d'entraînement étant obtenu automatiquement.

2. Système d'entraînement de chevaux automatique selon la revendication 1, **caractérisé en ce qu'**il est prévu une écurie (3) dans laquelle un premier moyen de guidage de chevaux (5), de préférence un piston, est capable de se déplacer dans celle-ci et il est prévu un couloir (2) dans lequel un deuxième moyen de guidage de chevaux (9), de préférence un piston, est capable de se déplacer dans celle-ci et de nombreux dispositifs d'entraînement de chevaux (1) agencés de préférence de manière successive.

3. Système d'entraînement de chevaux automatique selon les revendications 1 et 2, **caractérisé en ce qu'**il est prévu une pompe (7) actionnant le premier et le deuxième moyen de guidage de chevaux (5, 9) et un cylindre (6) permettant le mouvement desdits moyens de guidage (5, 9) dans celle-ci.

4. Système d'entraînement de chevaux automatique selon l'une quelconque des revendications précédentes, **caractérisé en ce qu'**il est prévu au moins une porte d'écurie (17), au moins une porte de couloir (10), au moins une porte avant de dispositif (12) et au moins une porte arrière de dispositif (11).

5. Système d'entraînement de chevaux automatique selon l'une quelconque des revendications précédentes, **caractérisé en ce qu'**il y a des capteurs d'écurie (18) situés dans l'écurie (3) et des capteurs de cylindre (19) pour terminer le mouvement du premier moyen de guidage de chevaux (5) au niveau de la porte d'écurie (17).

6. Système d'entraînement de chevaux automatique selon l'une quelconque des revendications précédentes, **caractérisé en ce que** ledit dispositif d'entraînement de chevaux (1) est pourvu d'un arbre (14), d'une roue (13) située à une extrémité de l'arbre (14) et de rails (16) avec les roues (13) disposées dans ceux-ci.

7. Système d'entraînement de chevaux automatique selon l'une quelconque des revendications précédentes, **caractérisé en ce qu'**un moyen de verrouillage (15) est réalisé au niveau de la partie avant dudit dispositif d'entraînement (1).

8. Système d'entraînement de chevaux automatique selon la revendication 7, **caractérisé en ce que** ledit moyen de verrouillage (15) est pourvu de bras flexibles (24), d'une partie femelle (25) et d'une partie mâle (26) connectant les bras flexibles (24) l'un à l'autre et de ressorts (23) disposés dans lesdits bras flexibles (24).

9. Système d'entraînement de chevaux automatique selon l'une quelconque des revendications précédentes, **caractérisé en ce qu'**une charnière (20) est prévue pour l'ouverture de la face arrière dudit dispositif d'entraînement de chevaux (1).

10. Système d'entraînement de chevaux automatique selon l'une quelconque des revendications précédentes, **caractérisé en ce que** tous les composants mécaniques dans la portée du système d'entraînement de chevaux sont actionnés par un équipement à commande automatique.

11. Système d'entraînement de chevaux automatique selon la revendication 10, **caractérisé en ce que** les composants mécaniques sont actionnés par un générateur de signaux électroniques (27) et un réflecteur (28) recevant lesdits signaux électroniques pour commander les composants.

12. Système d'entraînement de chevaux automatique selon l'une quelconque des revendications précédentes, **caractérisé en ce que** des brosses (30) sont prévues sous une grille (29) pour le nettoyage de sabots de course et de pattes de chevaux à la fin du programme d'entraînement.

13. Système d'entraînement de chevaux automatique selon l'une quelconque des revendications précédentes, **caractérisé en ce qu'**une ligne (31) est placée autour d'une course (4) et des points de connexion de ligne (32) pour déplacer les dispositifs d'entraînement (1) dans la direction verticale sont prévus.

14. Système d'entraînement de chevaux automatique selon la revendication 13, **caractérisé en ce que** ladite course (4) comprend au moins une course de galop, au moins une course de pas pour chevaux et au moins une course pour entraînement à vitesse constante de chevaux.

15. Système d'entraînement de chevaux automatique selon la revendication 14, **caractérisé en ce que** l'on prévoit des cordes (35) pour connecter les brides (36) des chevaux aux rails (16) et des roues (13) sont prévues aux extrémités desdites cordes (35) dans lesdites courses de galop et de pas.

16. Procédé d'entraînement automatique de chevaux avec un système d'entraînement de chevaux automatique selon l'une quelconque des revendications 1 à 15, comprenant les étapes suivantes consistant à :
- fournir les dispositifs d'entraînement de chevaux (1),
- diriger les chevaux dans les dispositifs d'entraînement de chevaux (1) par des moyens de guidage de chevaux,
- déplacer les dispositifs d'entraînement de chevaux (1) autour de la course (4),
- utiliser des électrodes et moyens vétérinaires pour surveiller les performances physiques des chevaux et évaluer les résultats au cours du programme d'entraînement,
- réaliser le mouvement des dispositifs d'entraînement de chevaux (1) et finir le programme d'entraînement de chevaux,
- enlever les chevaux des dispositifs d'entraînement (1) par des moyens de poussée (22).

17. Procédé d'entraînement automatique de chevaux selon la revendication 16, **caractérisé en ce que** les portes arrière (11) des dispositifs d'entraînement (1) sont alignées avec une porte de couloir (10) avant le programme d'entraînement.

18. Procédé d'entraînement automatique de chevaux selon la revendication 17, **caractérisé en ce qu'**après l'alignement de la porte arrière (11) des dispositifs d'entraînement (1) avec la porte de couloir (10), la porte d'écurie (17) est tout d'abord ouverte et ensuite la porte de couloir (11) est ouverte.

19. Procédé d'entraînement automatique de chevaux selon l'une quelconque des revendications précédentes 17 et 18, **caractérisé en ce qu'**après l'ouverture de la porte de couloir (11), le premier moyen de guidage (5) dans l'écurie (3) est déplacé et une fois qu'il atteint le niveau de la porte d'écurie (17), ledit premier moyen de guidage (5) est renvoyé à sa position initiale.

20. Procédé d'entraînement automatique de chevaux selon l'une quelconque des revendications précédentes 16 à 19, **caractérisé en ce qu'**après avoir atteint le niveau de la porte d'écurie (17) du premier moyen de guidage (5), le deuxième moyen de guidage (9) est déplacé à travers un couloir et en même temps la porte arrière (11) du dispositif d'entraînement (1) est ouverte.

21. Procédé d'entraînement automatique de chevaux selon la revendication 20, **caractérisé en ce qu'**après l'ouverture de la porte arrière (11), le cheval est introduit dans le dispositif d'entraînement (1) et la porte arrière (11) est fermée.

22. Procédé d'entraînement automatique de chevaux selon la revendication 21, **caractérisé en ce qu'**après la fermeture des portes arrière (11), lesdits dispositifs d'entraînement (1) sont déplacés et une fois que le programme d'entraînement est fini, les portes avant (12) des dispositifs d'entraînement (1) sont alignées avec les portes de couloir (17) et les portes avant (12) sont ouvertes.

23. Procédé d'entraînement automatique de chevaux selon l'une quelconque des revendications précédentes 16 à 22, **caractérisé en ce qu'**après l'ouverture des portes avant (12), la partie arrière du dispositif d'entraînement est ouverte et les moyens de poussée de chevaux (22) sont déplacés pour forcer les chevaux à quitter le dispositif d'entraînement.

24. Procédé d'entraînement automatique de chevaux selon la revendication 23, **caractérisé en ce qu'**après avoir quitté le dispositif d'entraînement (1) de chevaux, les sabots de course et les pattes de ceux-ci sont nettoyés.

25. Procédé d'entraînement automatique de chevaux selon l'une quelconque des revendications précédentes 23 et 24, **caractérisé en ce qu'**après être passé à travers le couloir (2), le cheval est introduit dans une écurie (3) et la porte de l'écurie (17) est fermée.
